# EUROPEAN PATENT SPECIFICATION

(11) **EP 2 056 629 B1**
(45) Date of publication and mention of the grant of the patent: **08.04.2015**
(21) Application number: 07119797.4
(22) Date of filing: 31.10.2007
(51) Int. Cl.: H04W 88/02, H04W 12/06

(54) **Mobile station with two smart-cards**
Mobile Station mit zwei Chipkarten
Station mobile dotée de deux cartes intelligentes

(43) Date of publication of application: 06.05.2009
(73) Proprietor: Vodafone Holding GmbH, 40213 Düsseldorf (DE)
(72) Inventor: Liss, Peter, 40213 Düsseldorf (DE)
(74) Representative: Ring & Weisbrodt

(56) References cited:
- EP-A- 0 786 916
- WO-A-99/55107
- DE-A1- 19 934 926
- FR-A- 2 790 161
- US-A- 5 875 404
- US-A1- 2006 172 772

## Description

### Field of the invention

This invention relates to a mobile station for a mobile network, in which identification and authentication for accessing the mobile network is made by a subscriber identification module, comprising
a) at least two smart card reader/writer units for inserting at least two smart cards each including a subscriber identification module for subscriber numbers of one or different mobile networks,
b) a manipulation mechanism for activating/deactivating one or more functions of at least one of the at least two smart cards inserted in the at least two smart card reader/writer units,
c) a detection unit for detecting of mobile networks, and
d) a controller unit for controlling the manipulation mechanism depending on the detected mobile network.

### Background art

As it is known, conventional cellular mobile communication networks, such as a GSM (Global System for Mobile Communication) network or a UMTS (Universal Mobile Telecommunication System) network, use a SIM (Subscriber Identity Module) for subscriber identification and authentication. For this purpose each mobile station, e.g. a mobile telephone handset, is provided with a SIM, which is usually located on a smart card. The smart card or SIM card is inserted in a slot of a SIM card reader and writer in the mobile station in order to allow the mobile station to receive services via a mobile network from a particular service provider.

A typical SIM card includes a microprocessor and memory units for storing user specific information, such as an IMSI (International Mobile Subscriber Identity) and an authentication key, and network specific data, e.g. a Service Provider Name (SPN) and a SMSC (Short Message Service Centre) number. The data transfer interface between the SIM card and a mobile station is formed by using electronic contacts on the surface of the SIM card.

In general the SIM card is removable from the mobile station and may be used with other mobile stations or may be substituted by another SIM card for an alternative subscription. Thus, different SIM cards may be used in one and the same mobile station successively. Most mobile stations can only receive a single SIM card in order to obtain the information relevant to a particular user subscription. However, there are mobile stations known in the art which simultaneously receive more than one SIM card.

The patent application DE 101 38 835 A1 describes a mobile phone using a plurality of SIM modules simultaneously and independent of each other. For this purpose each SIM module is provided with an own radio transmission and receiver unit of the mobile phone. The SIM modules may be assigned to different mobile communication networks or mobile communication providers. Operating with all SIM modules and radio transmission and receiver units at the same time, the mobile station enables a subscriber to use multiple mobile services simultaneously.

In the patent application GB 2 422 747 A a mobile phone is described which comprises two SIM cards and two separate radio transmitters. The mobile phone allows a user to place and receive two calls, on two separate accounts, at any given time, by using the two separate radio transmitters and managing both calls through intelligent software.

A significant disadvantage of the systems described above is that a deactivation or reactivation of SIM cards or parts of the functions of a SIM card is not provided. If, for example, two SIM cards from mobile network providers of different countries are used, one of the SIM cards is roaming which results in additional charges for each incoming call. In order to avoid excessive charges the user can only suppress incoming calls directed to the roaming SIM card by manually setting the mobile phone to silent, or manually rejecting incoming calls under a "settings" menu of the mobile phone, which is cumbersome taking several steps. Further on, if the countries belong to different time zones, the user may be disturbed in the middle of the night by not urgent incoming calls via the roaming SIM card.

Other known mobile stations including two or more SIM cards only permit the usage of one SIM card at a time for accessing a mobile communication network. A user manually chooses the preferred SIM card before he registers in a mobile communication network for mobile services. All other SIM cards are deregistered and deactivated while using the preferred SIM card.

Besides the cumbersome and error-prone manual selection of the active SIM card these mobile stations have the drawback, that a user is not available on the mobile station for callers only knowing the number of a temporarily not used SIM card. These callers may abandon to contact the user, e.g. assuming they have a wrong number.

The document FR 2 790 161 concerns a method for identifying a subscriber whereby the subscriber is provided with a mobile station equipped with a subscriber identification module comprising means for identifying himself to a first telecommunication network under a first identity and means for identifying himself to a second telecommunication network under a second identity. The document discloses also a subscriber identification module (SIM) for implementing said method.

The document WO 99/55107 relates to a telecommunications method which enables a visited mobile radio telephone network (VPLMN, VPLMN') to be connected to a subscriber of a home mobile telephone network (HPLMN) without roaming agreements with the home mobile radio telephone network (HPLMN). To this end, a first IMSI number (IMSI1) from a number range of the subscriber's home mobile telephone network (HPLMN) and a second IMSI number (IMSI2) from the number range of a partner network (PPLMN) are assigned to the subscriber. The partner network (PPLMN) can be used via additional roaming agreements, and a common subscriber's number (MSISDN) is assigned to both aforementioned IMSI numbers (IMSI1, IMSI2). Both IMSI numbers (IMSI1, IMSI2) can preferably be stored on a common identification module or on different identification modules.

The document DE 199 34 926 discloses a mobile telephone which can operate with at least two SIM cards. The cards may be operated in parallel. The active SIM card is selected or activated by software and/or hardware. The mobile telephone may be contacted via more than one SIM card, which may be for different national and foreign networks.

US 2006/0172772 A1 describes a mobile terminal having two SIM cards. Detections means of the mobile terminal detected an identifier of the currently used SIM card and sending means send a communication to a communication server indicating an association between an identifier of a user and the identifier of the current SIM card. The communication server uses the association for call establishment to and from the mobile terminal. Calls placed to the user are redirected to the communication server and a routing table for establishing outgoing calls is sent to the mobile terminal.

### Disclosure of the invention

The object of the present invention is to alleviate the drawbacks described above and to provide a mobile station which enables a secure, cost effective and user-friendly simultaneous usage of two smart cards including subscriber identification modules respectively.

According to the present invention the object is achieved in that a mobile station for a mobile network, in which identification and authentication for accessing the mobile network is made by a subscriber identification module, comprising at least two smart card reader/writer units for inserting at least two smart cards as subscriber identification modules for subscriber numbers one or of different mobile networks further comprises
e) voice call function means enabling or supporting the manipulation mechanism to activate or deactivate a voice call function of at least one of the at least two smart cards separately, and
f) messaging functions means enabling or supporting the manipulation mechanism to activate or deactivate a text messaging function, especially SMS functionality, of at least one of the at least two smart card independent from the respective voice call function.

The detection unit detects currently available mobile networks. Depending on this information the controller unit uses the manipulation mechanism to activate the favoured functions, e.g. voice calls, voice mailbox, messaging and/or forwarding, of one smart card to use with one of the detected mobile networks respectively. Other not desired functions of this smart card may be deactivated. The other smart card or smart cards are treated respectively. For example, in the simplest case all functions of one smart card are activated while all functions of the other smart card are deactivated. Or, a little more sophisticated, some functions of the other smart card remain active. It may be seen therefore that a number of combinations of activated or deactivated functions of the smart cards are possible. The preference of a function belonging to a smart card for an according mobile network can be predetermined, for example, by the user, a network operator or both of them.

By providing a detection unit, a controller unit and a manipulation mechanism in a mobile station with at least two smart cards including SIM's (Subscriber Identification Modules) the appropriate functions of the according smart cards are automatically used at all times. This is particularly favourable when the mobile stations leaves or enters the range of a home mobile network of one smart card in the mobile station. In this case a correct activating or deactivating of the functions of the respective smart card is performed immediately by the controller unit. The handling of two or more smart cards in one mobile station is significantly facilitated for a user and operating errors are avoided. Furthermore the flexibility of the mobile station is increased considerably and an exact and easy feasible adaptation to user specifications is enabled.

A preferred embodiment of the mobile station according to the present invention is based therein, that the smart cards are used for mobile networks of different countries. In this case at least one of the smart cards including a subscriber identification module is roaming in a foreign mobile network. Using the roaming smart card will result in extensive charges, especially for the forwarded leg of incoming calls. This disadvantage is avoided very effectively by the mobile station according to the present invention. If the detection unit recognises a home mobile network of one of the smart cards, the controller unit causes the manipulation mechanism to activate at least the main functions of this smart card. The functions of the other now roaming smartcard are deactivated partially or totally by the manipulation mechanism. Therefore in a home mobile network, the user always uses the functions of the appropriate smart card, for example for voice calls, automatically.

In another preferred embodiment of the mobile station according to the present invention the smart cards are used for mobile networks of different network providers. The different mobile network providers may operate in the same region. Hence the favoured services of a corresponding network provider are used automatically by activating the respective functions of a smart card with the control unit and the manipulation mechanism. Other not desired services of the network providers will be disabled by deactivating the according functions of a smart card. Thus, the usage of two or more smart cards from different network providers in one mobile station is significantly simplified for a user and unintentionally requiring an undesirable service is avoided.

Preferably, a timer and/or positioning means are provided by an embodiment of a mobile station according to the present invention enabling the control unit to activate or deactivate functions of the smart cards dependent on predefined times and/or geographical positions. This is especially helpful using time-dependent or position-dependent services or chargeable services with time-dependent or position-dependent fees. For example, the cheapest service is used by activating the respective functions of the according smart card by the control unit automatically. Furthermore a user can easily request the same service from different network providers depended on a particular time or location. For example the user can use one smart card for his office and another smart card at home with the same mobile station automatically and without a cumbersome manual change of smart cards. Using a business smart card during the day and a private smart card in the evening or night with the same mobile station is also provided in a very convenient manner by this embodiment of the present invention.

In an advantageous embodiment of the mobile station according to the present invention the manipulation mechanism allows for logging in a subscriber to a mobile network, especially to a mobile network belonging to one of the smart cards. The manipulation mechanism supports the login of a subscriber, particularly after the control unit has fulfilled a switching from a first smart card to a second smart card by deactivating functions of the first smart card and activating functions of the second smart card. Thus, operating the mobile station during and immediately after a switching of functions is facilitated. Furthermore after the switching a secure and immediate login to the appropriate mobile network is performed by the manipulation mechanism.

In another preferred embodiment of the mobile station according to the present invention the manipulating mechanism allows for activating/deactivating a voice transmission function of at least one of the at least two smart cards. The voice transmission function can be activated or deactivate for each smart card in the mobile station separately. Therefore the favoured smart card according to the available mobile networks detected by the detection unit is used for voice calls by activating the respective voice transmission function. Undesirable voice calls via other smart cards are disabled by deactivating the voice call function of these smart cards. Since each smart card provides a unique International Mobile Subscriber Identity (IMSI) and a unique voice call subscriber number (MSISDN: Mobile Subscriber ISDN Number), a caller using the MSISDN of a smart card with deactivated voice call functions will not be connected to the user of the mobile station. Thus undesired voice calls, for example forwarded calls to a roaming smart card of the mobile station or calls during inappropriate periods of time, are avoided very effectively while other functions of the smart card remain active.

In a further advantageous embodiment of the mobile station according to the present invention the manipulating mechanism allows for activating/deactivating a text transmission function, especially SMS (Short Message Service) functionality, of at least of the at least two smart card. Besides the SMS functionality a text transmission function can also be applied for sending and receiving other messages like a MMS (Multimedia Message Service) message or an e-mail. The transmission function is activated or deactivated by the manipulation mechanism independent from other functions of a smart card. While some functions of the smart card are temporarily deactivate (e.g. voice calls functions), for example, the user still is able to receive messages addressed to the smart card or send messages originated from the this smart card. The risk of losing contacts or missing important information or calls is eliminated by this embodiment of the present invention. The user can be informed about missed or rejected voice calls by a SMS message by way of Missed Call Notification (MCN) or in an other way. The availability of the user via the smart card with partially deactivated functions is assured in an inexpensive and secure way. Further a recipient does not come to know the subscriber number of the smart card with active voice call, which may be undesired or could confuse him.

A further advantageous embodiment of the mobile station according to the present invention is achieved by connecting means between both smart cards for synchronizing data, such as contact addresses. Usually a user has the choice between storing phone numbers, addresses and other data on the mobile station or on one of the smart cards. With the connecting means data stored on one smart card can easily and quickly be transmitted to the other smart card, especially in order to synchronize the data on both smart cards. Therefore the user always has access to any stored data independent of the currently used smart card.

Further embodiments and advantages result from the subject matter of the sub-claims as well as the drawing with the accompanying description.

In the following one non limiting example of an embodiment according to the present invention is described in detail referring to the annexed drawing.

### Brief description of the drawing

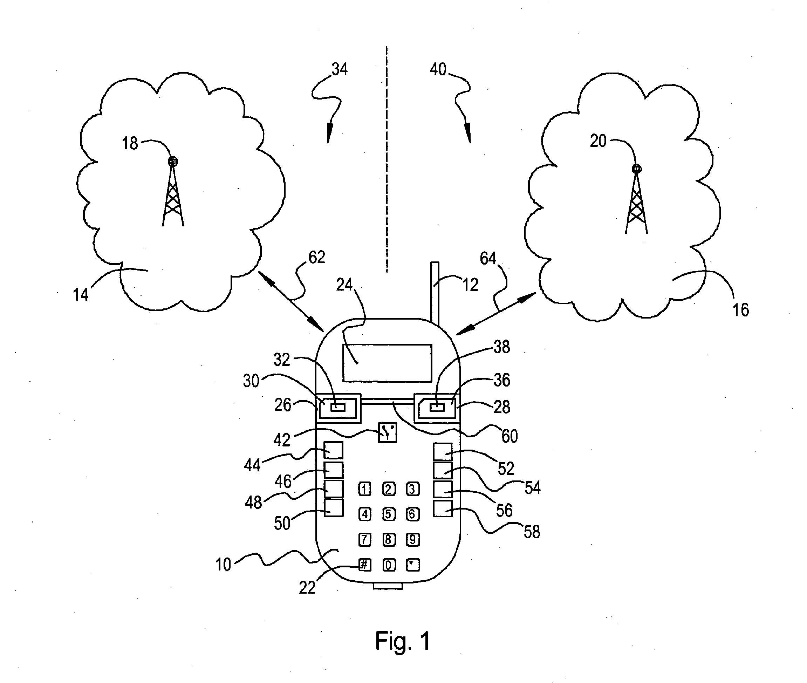

- Fig. 1: is a principle sketch of an embodiment of a mobile station according to the present invention using two smart cards.

### Preferred embodiment

In figure 1 a mobile station 10 is shown. The mobile station 10, for example, can be a mobile phone, a car phone, a smart phone, a fixed computer (e.g. PC) or a mobile computer (e.g. Notebook, PDA) or a other device with a built in or plugged on radio interface module 12 (e.g. PMCCIA card). The mobile station 10 enables a user to communicate via a cellular mobile network, for example according to the GSM, GPRS, HSCSD, EDGE, CDMA, CDMA2000, UMTS, a WLAN standard (e.g. IEEE 802.11) or a fourth generation standard. These mobile networks with the corresponding elements and functions are well known by those who are skilled in the art. To simplify matters a first mobile network 14 and a second mobile network 16 of the above mentioned kind are shown stylised as clouds in fig. 1 including a radio mast 18 and 20 respectively.

The mobile station 10 comprises all necessary means for a communications via a mobile network 14, 16 by voice, messaging or exchange of other data. Particularly the mobile station 10 comprises an operating unit 22, a display 24, the radio interface module 12 and two smart card reader and writer units 26, 28. The smart card reader and writer unit 26 contains a removable smart card 30 including a subscriber identification module (SIM) 32 for the mobile network 14 of country A, arrow 34. The smart card reader and writer unit 28 contains a removable smart card 36 including a subscriber identification module 38 for the mobile network 16 of country B, arrow 40. The smart cards 30, 36 are distributed to a user by a network provider when the user registers for using the respective mobile network 14, 16.

The mobile station 10 further comprises a manipulation mechanism 42 for activating or deactivating functions of either one of the smart cards 30, 36 in the smart card reader and writer units 26, 28 separately. For example, these functions can be voice call functions, voice mail recording functions, messaging functions, forwarding functions or other functions. The manipulation mechanism 42 is controlled by a controller unit 44 getting information about currently available mobile networks 14, 16 from a detecting unit 46 comprised by the mobile station 10.

The smart cards 30, 36 may belong to different or the same mobile network provider. If the smart cards 30, 36 belong to mobile networks 14, 16 in the same region or even to the same mobile network 14, 16, the activating or deactivating of functions is performed, for example, by the controller unit 44 using a timer 48 or positioning means 50 provided by the mobile station 10 and predefined times or locations. A manual setting by a user is also possible. The controller unit 44 is able to realise predefined settings like preferred mobile networks 14, 16, times or locations, which are for example stored in a preferences memory 52, by using the detecting unit 46 and the manipulation mechanism 42. Preferred settings can be predefined by the user, a mobile operator or both.

In alternative embodiments not removable smart cards or other removable or fixed devices including a SIM can be used in the mobile station 10 instead of removable smarts cards. Providing more than two smart card reader and writer units 26, 28 and more than two smarts cards respectively in the mobile station 10 is possible as well.

The mobile station 10 can provide voice call function means 54 enabling or supporting the manipulation mechanism 42 to activate or deactivate voice call functions of one or both smart cards 30, 36 separately. Further the mobile station 10 can provide messaging function means 56 enabling or supporting the manipulation mechanism 42 to activate or deactivate messaging functions of one or both smart cards 30, 36 separately. Alternatively, the voice call function means 54 and the messaging function means 56 can be provided by a mobile network 14, 16 or both, the mobile station 10 and a mobile network 14, 16.

Furthermore the mobile station 10 comprises login means 58 and connecting means 60. The login means 58 support a immediate, secure and easy to handle subscriber login to a mobile network 14, 16 by the manipulation mechanism 42, especially after a switching from functions of one smart card 30, 36 to functions of the other smart card 30, 36 has occurred. With the connecting means 60 an exchange of data between the smart cards 30, 36 is accomplishable, for example, to synchronise addresses, numbers or other data stored on the smart cards 30, 36.

When a user resides in country A 34 and turns on the mobile station 10, the detecting unit 46 detects the available mobile network 14 and reports this to the controller unit 44. The controller unit 44 activates the functions of the appropriate smart card 30 belonging to the mobile network 14 using the manipulation mechanism 42. Not desired functions of the other smart card 36 are disabled, e.g. the voice functionality of the other smart card 36. With the SIM 32 on the smart card 30 and the login means 58 the mobile station 10 is logged in to the mobile network 14 using the SIM 32 for a user identification and authentication. The user now has access, arrow 62, to the mobile network 14 and can communicate with other persons or use other mobile network services.

If the user moves the mobile station 10 from country A 34 to country B 40, the detecting unit 46 detects the newly available mobile network 16 of country B 40. The controller unit 44 then activates the favoured functions of smart card 36 with the manipulation mechanism 42, since these are the appropriate ones for the mobile network 16 according to the preferences memory 52. Not desired functions of the smart card 32, like the voice call function, are deactivate by the manipulation mechanism 42 controlled by the controller unit 44. Again, the mobile station 10 is logged in using the login means 58 and the SIM 38 on the smart card 36 and the user is able to communicate via the mobile network 16, arrow 64. In doing so the smart card 30 is partially deactivated but, for example, the SMS functionality of smart card 30 remains active. The user always uses the appropriate smart card 30, 36, even immediately after entering a region with another mobile network 14, 16. The expensive roaming of smart card 30 in country B 40 or smart card 36 in country A 34 is avoided very effectively.

Assuming that the user of the mobile station 10 resides in country A 34 and is logged in to the mobile network 14 with the corresponding smart card 30 and the voice call function of smart card 36 is deactivated. Then a caller in country B 40 using the subscriber number (MSISDN) of the smart card 36 to call the user can not be connected to the mobile station 10. In such cases usually a voice mailbox in the mobile network 16 offers to leave a voice mail. Thus, the user of the mobile station 10 must frequently interrogate his voice mailbox in the mobile network 16, in order to not miss important messages. This circumstance is very laborious and expensive for the user.

This problem is solved by the mobile station 10 using the manipulation mechanism 42 to deactivate the voice mailbox in the mobile network 16 while logging in to the mobile network 14 and vice versa. Instead using a voice mailbox, the partially deactivated smart card 30, 36, the manipulation mechanism 42 and/or the respective mobile network 14, 16 automatically generate a personalised or non-personalised voice mail. The voice mail, for example, could say to a caller calling the partially deactivated smart card 30, 36 that no voice call is possible but the user still receives text messages addressed to the address of the partially deactivated smart card 30, 36.

Due to the manipulation mechanism 42 and/or the messaging function means 56 of the mobile station 10, the user is able to receive messages sent to the partially deactivated smart card 30, 36. Such messages can be forwarded to another destination or be answered with the mobile station 10 using the subscriber number of the partially deactivated smart card 30, 36 as return address.

The above described example is one of many possible applications of the mobile station 10. Using the preferences memory 50, the user or a network provider is able to predetermine the behaviour of the mobile station 10 in a very effective and flexible manner.

In a further embodiment the mobile station 10 comprises two operating units 22 and two displays 24. Each smart card 30, 36 has its own operating unit and display. For example, one operating unit and display is disposed on the front side of the mobile station and the other operating unit and display on the back side. This simplifies the operation of the mobile station 10, because the user always is aware of the smart card 30, 36 he is operating with in the moment. For example, the display corresponding to the smart card with partially deactivated functions may present the text "Only SMS active - not active for voice calls" while the display of the smart card with all functions active shows "Activated" or the like.

The mobile station 10 avoids the inconvenience of using two mobile phones or manually changing smart cards and significantly facilitates the handling of two smart cards 30, 36 used in one mobile station. Further the mobile station 10 provides a secure, flexible and user-friendly use of two smart cards 30, 36.

## Claims

1. A mobile station (10) for a mobile network (14, 16), in which identification and authentication for accessing the mobile network (14, 16) is made by a subscriber identification module (32, 38), the mobile station (10) comprising
a) at least two smart card reader/writer units (26, 28) for inserting at least two smart cards (30, 36) each including a subscriber identification modules (32, 38) for subscriber numbers of one or different mobile networks (14, 16),
b) a manipulation mechanism (42) for activating/deactivating one or more functions of at least one of the at least two smart cards (30, 36) inserted in the at least two smart card reader/writer units (26, 28),
c) a detection unit (46) for detecting of mobile networks (14, 16),
d) a controller unit (44) for controlling the manipulation mechanism (42) depending on the detected mobile networks (14, 16),
**characterised in that**
e) the mobile station comprises voice call function means (54) enabling or supporting the manipulation mechanism (42) to activate or deactivate a voice call function of at least one of the at least two smart cards (30, 36) separately, and
f) messaging functions means (56) enabling or supporting the manipulation mechanism (42) to activate or deactivate a text messaging function, especially SMS functionality, of at least one of the at least two smart cards (30, 36) independent from the respective voice call function.

2. A mobile station (10) for a mobile network (14, 16) as described in claim 1 **characterised in that** the at least two smart cards (30, 36) are for mobile networks (14, 16) of different countries (34, 40).

3. A mobile station (10) for a mobile network (14, 16) as described in claim 1 or 2 **characterised in that** the at least two smart cards (30, 36) are for mobile networks (14, 16) of different network providers.

4. A mobile station (10) for a mobile network (14, 16) as described in any of claim 1 to 3 **characterised by** a timer (48) and/or positioning means (50) enabling the control unit (44) to activate or deactivate functions of the at least two smart cards (30, 36) dependent on predefined times and/or geographical positions.

5. A mobile station (10) for a mobile network (14, 16) as described in any of claim 1 to 4 **characterised in that** the manipulation mechanism (42) allows for logging in a subscriber to a mobile network (14, 16), especially to a mobile network (14, 16) belonging to one of the at least two smart cards (30, 36).

6. A mobile station (10) for a mobile network (14, 16) as described in any of claim 1 to 5 **characterised by** connecting means (60) between the at least two smart cards (30, 36) for synchronizing data, such as contact addresses.

## Patentansprüche

1. Mobilfunkendgerät (10) für ein Mobilfunknetz (14, 16), in welchem eine Identifikation und Authentifizierung für einen Zugang zu dem Mobilfunknetz (14, 16) mittels eines Teilnehmeridentifikationsmoduls (32, 38) erfolgt, das Mobilfunkendgerät (10) umfasst
a) wenigstens zwei Chipkarten-Lese-/Schreibeinheiten (26, 28) zur Aufnahme von wenigstens zwei Chipkarten (30, 36), die jeweils ein Teilnehmeridentifikationsmodul (32, 38) für Teilnehmernummern eines oder verschiedener Mobilfunknetze (14, 16) enthalten,
b) einen Handhabungsmechanismus (42) zur Aktivierung/Deaktivierung einer oder mehrerer Funktionen wenigstens einer der wenigstens zwei in den wenigstens zwei Chipkarten-Lese-/Schreibeinheiten (26, 28) aufgenommenen Chipkarten (30, 36),
c) eine Detektionseinheit (46) zur Detektion von Mobilfunknetzen (14, 16),
d) eine Steuereinheit (44) zur Steuerung des Handhabungsmechanismus (42) in Abhängigkeit von dem detektierten Mobilfunknetz (14, 16),
**dadurch gekennzeichnet, dass**
e) das Mobilfunkendgerät (10) weist Sprachtelefonie-Funktions-Mittel zum Ermöglichen oder Unterstützen des Handhabungsmechanismus (42) zum separaten Aktivieren oder Deaktivieren einer Sprachtelefonie-Funktion wenigstens einer der wenigstens zwei Chipkarten (30, 36), und
f) Nachrichten-Funktions-Mittel (56) zum Ermöglichen oder Unterstützen des Handhabungsmechanismus (42) zum Aktivieren oder Deaktivieren einer Textnachrichten-Funktion, insbesondere einer SMS-Funktionalität, wenigstens einer der wenigstens zwei Chipkarten (30, 36) unabhängig von der jeweiligen Sprachtelefonie-Funktion.

2. Mobilfunkendgerät (10) für ein Mobilfunknetz (14, 16) nach Anspruch 1, **dadurch gekennzeichnet, dass** die wenigstens zwei Chipkarten (30, 36) für Mobilfunknetze (14, 16) verschiedener Länder (34, 40) sind.

3. Mobilfunkendgerät (10) für ein Mobilfunknetz (14, 16) nach Anspruch 1 oder Anspruch 2, **dadurch gekennzeichnet, dass** die wenigstens zwei Chipkarten (30, 36) für Mobilfunknetze (14, 16) verschiedener Netzbetreiber sind.

4. Mobilfunkendgerät (10) für ein Mobilfunknetz (14, 16) nach einem der Ansprüche 1 bis 3, **gekennzeichnet durch** einen Zeitgeber (48) und/oder ein Positionierungsmittel (50) um der Steuereinheit (44) zu ermöglichen, Funktionen der wenigstens zwei Chipkarten (30, 36) abhängig von vordefinierten Zeiten und/oder geografischen Positionen zu Aktivieren/Deaktivieren.

5. Mobilfunkendgerät (10) für ein Mobilfunknetz (14, 16) nach einem der Ansprüche 1 bis 4, **dadurch gekennzeichnet, dass** der Handhabungsmechanismus (42) ein Einbuchen eines Teilnehmers in einem Mobilfunknetz (14, 16) ermöglicht, insbesondere in einem einer der wenigstens zwei Chipkarten (30, 36) zugehörigen Mobilfunknetz (14, 16).

6. Mobilfunkendgerät (10) für ein Mobilfunknetz (14, 16) nach einem der Ansprüche 1 bis 5, **gekennzeichnet durch** Verbindungsmittel (60) zwischen den wenigstens zwei Chipkarten (30, 36) zur Datensynchronisation, wie beispielsweise Kontaktadressen.

## Revendications

1. Station mobile (10) destinée à un réseau mobile (14, 16), dans lequel l'identification et l'authentification pour avoir accès au réseau mobile (14, 16) sont effectuées par un module d'identification d'abonné (32, 38), la station mobile (10) comprenant
a) au moins deux unités de lecture/écriture de cartes à puce (26, 28) pour insérer au moins deux cartes à puce (30, 36) dont chacune comprend un module d'identification d'abonné (32, 38) pour des numéros d'abonnés d'un ou des réseaux mobiles (14, 16) différents.
b) un mécanisme de manipulation (42) destiné à activer/désactiver une ou plusieurs fonctions d'au moins une des au moins deux cartes à puce (30, 36) insérées dans les au moins deux unités de lecture/écriture de cartes à puce (26, 28),
c) une unité de détection (46) destinée à détecter des réseaux mobiles (14, 16),
d) une unité de commande (44) destinée à commander le mécanisme de manipulation (42) en fonction des réseaux mobiles détectés (14, 16),
**caractérisée en ce que**
e) la station mobile comprend des moyens de fonction d'appel vocal (54) qui permettent au mécanisme de manipulation (42) ou l'aident à activer ou désactiver séparément une fonction d'appel vocal d'au moins une des au moins deux cartes à puce (30, 36), et
f) des moyens de fonctions de messagerie (56) qui permettent au mécanisme de manipulation (42) ou l'aident à activer ou désactiver une fonction de messagerie à texte, notamment une fonctionnalité SMS, d'au moins une des au moins deux cartes à puce (30, 36) indépendamment de la fonction d'appel vocal respective.

2. Station mobile (10) destinée à un réseau mobile (14, 16) selon la revendication 1, **caractérisée en ce que** les au moins deux cartes à puce (30, 36) sont destinées aux réseaux mobiles (14, 16) de pays différents (34, 40).

3. Station mobile (10) destinée à un réseau mobile (14, 16) selon la revendication 1 ou la revendication 2, **caractérisée en ce que** les au moins deux cartes à puce (30, 36) sont destinées à des réseaux mobiles (14, 16) des fournisseurs de réseau différents.

4. Station mobile (10) destinée à un réseau mobile (14, 16) selon l'une quelconque des revendications 1 à 3, **caractérisée par** un minuteur (48) et/ou des moyens de positionnement (50) qui permettent à l'unité de commande (44) d'activer ou de désactiver des fonctions des au moins deux cartes à puce (30, 36) en fonction des heures prédéfinies et/ou des positions géographiques.

5. Station mobile (10) destinée à un réseau mobile (14, 16) selon l'une quelconque des revendications 1 à 4, **caractérisée en ce que** le mécanisme de manipulation (42) permet à un abonné de se connecter à un réseau mobile (14, 16), notamment à un réseau mobile (14, 16) qui appartient à une des au moins deux cartes à puce (30, 36).

6. Station mobile (10) destinée à un réseau mobile (14, 16) selon l'une quelconque des revendications 1 à 5, **caractérisée par** des moyens de connexion (60) entre les au moins deux cartes à puce (30, 36) pour synchroniser des données telles que des adresses de contact.
